# EUROPEAN PATENT SPECIFICATION

(11) **EP 1 646 099 B1**
(45) Date of publication and mention of the grant of the patent: **10.12.2008**
(21) Application number: 05108739.3
(22) Date of filing: 21.09.2005
(51) Int. Cl.: H01M 8/02, H01M 8/10

(54) **Electrochemical device**
Elektrochemische Vorrichtung
Dispositif électrochimique

(30) Priority: 28.09.2004 IT BO20040600
(43) Date of publication of application: 12.04.2006
(73) Proprietor: Exergy Fuel Cells S.R.L., 40057 Granarolo dell'Emilia (BO) (IT)
(72) Inventor: POZZIO, Alfonso, 00139, ROMA (IT); D'ANZI, Angelo, 40059, MEDICINA BO (IT); PETRUZZI, Luca, 51030, PISTOIA (IT); CHIAPPARINI, Marco, 40133, BOLOGNA (IT)
(74) Representative: Modiano, Micaela Nadia

(56) References cited:
- US-A- 5 712 054
- US-A1- 2001 053 472

## Description

The present invention relates to an electrochemical device which can be defined more appropriately as a particular embodiment of a fuel cell or of an electrolysis unit.

Electrolysis units are devices which allow the electric power applied to the device to be converted into chemical energy contained in a fuel and an oxidant.

The most common devices are those in which the flow of electric current generates the electrolysis of water so as to form hydrogen and oxygen in the gaseous phase. The water, on the anode side, is reduced in these catalytic interface regions by applying electric power from an external circuit; the protons that are generated pass through the electrolyte and oxidize into gaseous hydrogen on the cathode side, while gaseous oxygen is generated on the anode side.

The fuel cell is an electrochemical device in which in principle the chemical energy contained in a fuel and an oxidant is converted into electric power: a fuel (typically hydrogen or other fuels which include it amongst their components) and an oxidant (oxygen or air) enter the cell, and direct electric current, water and heat are obtained from them. They are similar to batteries, and therefore, like the other voltaic elements, a fuel cell is formed substantially by two electrodes, a cathode and an anode, and by an electrolyte which allows the migration of the ions.

Differently from common batteries, in the fuel cell the active material is renewed continuously and therefore the direct electric current can be delivered indefinitely as long as the supply of fuel and oxidant gases is maintained.

The fuel (hydrogen) and the oxidant gases (oxygen provided simply from the air) respectively flow over the anode and the cathode (on the opposite faces with respect to the faces in contact with the electrolyte). In view of the porosity of the electrodes, the fuel oxidation reaction and the oxidant gas reduction reaction are thus fed continuously.

Normally, in fuel cells the regions of interface between the electrodes and the electrolyte are provided with at least one layer of catalytic material, which allows the oxidant reduction reaction (cathode side) and fuel oxidation reaction (anode side) to occur at the chosen ratio. The electrolyte is designed to conduct the ions that are generated proximate to one of the electrodes and consumed proximate to the other electrode. This ion flow is accompanied by a flow of electrons from the anode to the cathode through an external circuit. Each individual cell thus composed is coupled in electrical series to the next cell by interposing a layer of electrically conducting material, which usually also acts as a flow field for the reagents.

The electrochemical conversion is accompanied by the generation of heat, which has to be extracted in order to keep the operating temperature of the cell within the values that allow its regular operation.

A fundamentally important aspect for the applications of fuel cells is the fact that the effluents (water and used gases), which must be removed continuously from the cell, do not contain pollutants.

The cell substantially has a three-layered structure, in which the central layer, comprised between the cathode and the anode, constitutes or contains the electrolyte. In practice, the facing surfaces must have an area that is sufficient to obtain current intensities that are adequate for the requirements of the application. Surfaces of even more than one square meter can thus be reached, depending on the application and on the sequential configuration of the cells. The individual cells (characterized by voltages comprised between one half of a volt and 1 volt, depending on the technology used, on the operating conditions and on the electric load connected thereto) are mutually stacked, connecting them in series so as to obtain a total voltage having the chosen value. The resulting stacking of cells forms the so-called stack (or pile), which is the basis of the electrochemical section. Generally, a fuel cell system is composed not only by the power module (which contains the electrochemical section) but also by a current converter (inverter) and a transformer, which convert the direct current generated by the pile into alternating current at the chosen voltage and frequency.

The present application refers in particular to electrochemical devices in which there is a proton-exchange electrolyte.

In particular, reference is made hereinafter to fuel cells based on a proton-exchange electrolyte which are supplied with hydrogen or mixtures of gases which also contain hydrogen, while being aware that the invention has general validity for any electrochemical device in which there is a proton-exchange membrane.

Currently, these devices provided with a proton-exchange electrolyte are substantially of two types: phosphoric acid fuel cells (PAFC) and polymer electrolyte fuel cells (PEFC).

The former are characterized by the use of a liquid solution of phosphoric acid as an electrolyte. They have shown satisfactory performance and life, but the need to use enormous amounts of catalyst at the electrodes and the difficulty to manage an acid electrolyte in the liquid phase do not allow to reduce production costs sufficiently for their largescale diffusion.

The latter are electrochemical devices which have a solid electrolyte and require humidification of said electrolyte in order to achieve adequate ion conductivity within said electrolyte. This humidification is currently achieved by introducing steam in the reagents in input to the device.

The devices most commonly used for this purpose are polymeric- membrane systems (e.g., the Perma Pure LLC FC series) or enthalpy wheels (e.g., Humidicore™).

In the former, a polymeric membrane, which has molecular permeability to water, allows to transfer water molecules from a stream of gas with high humidity (for example, the cathode stream output from the pile) or from a stream of liquid water, to the streams of reagent gases in input to the pile.

In the latter, a rotating device allows the transfer of water between said streams.

Both systems have substantial costs and complications in their management in different operating conditions (temperature, reagent flow-rate, ratio of reaction per unit surface of electrolyte).

The resulting humidification is not uniform but is strictly dependent on the path of the reagent gases in their field of flow adjacent to the surface of the exchange membrane.

Regions of excessive or insufficient humidification often introduce locally or globally very high polarizations or problems in the diffusion of the gases [Fuel Cell Handbook, fifth edition (3.2), US Department of Energy, USA, 2000], which in addition to reducing drastically the conversion efficiency of the device introduce such high heat generation as to degrade the components of the system.

Moreover, within the fuel cell pile there is the need to remove the heat generated by the electrochemical reactions. This heat, which is generated predominantly on the inside of the membrane, is currently removed indirectly by cooling the bipolar plates by means of a refrigerating fluid.

This solution does not allow to avoid the local generation of temperature peaks on the membrane.

These phenomena cause the difficulty observed in obtaining, for polymer electrolyte fuel cells, an operating life that is suitable for their commercial use.

US Patent 5.712.054 discloses a hydrogen ion based battery cell comprising two electrodes, an ion conducting membrane of a sandwich construction having a liquid electrolyte trapped between two porous electrically non conductive sheets, a liquid electrolyte contained in two separate chambers under the electrodes, two horizontal filters permeable by liquids and gases located under the electrodes, two additional electrodes submerged in the electrolyte in the chambers and an electrically insulating, gas and liquid sealing housing which comprises all the components and is divided by said membrane into two halves that are hermetically sealed to said membrane.

The aim of the present invention is to obviate the cited drawbacks and meet the mentioned requirements, by providing an electrochemical device which can be operated without requiring external humidification regardless of the operating conditions and in which the reaction region can be cooled uniformly by the liquid phase of the aqueous solution of electrolyte, leading to the expectation of a more reliable and durable system.

An object of the present invention is to provide a device which allows immediate integration within systems which have a lower cost than current ones, are more reliable and can be operated in a particularly simple manner.

Within this aim and object, another object of the present invention is to provide a device which is simple, relatively easy to provide in practice, safe in use, effective in operation, and has a relatively low cost.

This aim and these objects are achieved by the present electrochemical device of the type which comprises at least one pair of mutually facing electrodes, between which an electrolyte is interposed, said electrodes being porous and being contacted respectively by a fuel and by an oxidant which arrive from respective supply circuits, characterized in that said electrolyte has a substantially laminar structure, comprising at least two laminas of electrolyte in the solid state between which at least one layer of electrolyte in the liquid state is interposed within a gap, said electrolyte in the liquid state being contained within a forced-circulation circuit which also comprises said gap.

Further characteristics and advantages of the invention will become better apparent from the following detailed description of a preferred but not exclusive embodiment of an electrochemical device, illustrated by way of non-limiting example in the accompanying drawings, wherein:
Figure 1 is a schematic sectional side view, taken along a longitudinal plane, of an electrochemical device according to the invention;
Figure 2 is a functional block diagram of a system associated with an electrochemical device according to the invention;
Figure 3 is a schematic sectional side view, taken along a longitudinal plane, of the elementary cell of an electrochemical device according to the invention;
Figure 4 is a front view of a separation layer of an electrochemical device according to the invention;
Figure 5 is a front view of a bipolar plate of an electrochemical device according to the invention;
Figure 6 is a sectional view, taken along the line VI-VI of Figure 4.

With reference to the figures, the reference numeral 1 generally designates an electrochemical device.

The electrochemical device 1 comprises at least one pair of electrodes, an anode 2 and a cathode 3, which are substantially flat and face each other; an electrolyte is interposed between them. The electrodes 2 and 3 are porous and are respectively contacted by a fuel and by an oxidant, which arrive from respective supply circuits (channels 4 for the fuel and channels 5 for the oxidant). The electrolyte has a substantially laminar structure and comprises two laminas of electrolyte in the solid state 6 (generally of the polymeric type), between which at least one layer of electrolyte in the liquid state 8 (generally an aqueous solution of sulfuric acid) is interposed within a gap 7. The electrolyte in the liquid state 8 is contained within a forced circulation circuit which also comprises the gap 7.

The forced circulation circuit comprises a pressurization apparatus 9, designed to maintain the pressure of the electrolyte 8 within said circuit at a preset value, ensuring the perfect adhesion, by expansion of the gap 7, of the laminas of the solid electrolyte 6 to the electrodes 2 and 3.

The elementary electrochemical cell 10 is sandwiched in two layers of solid electrolyte 6 of the polymeric type, on each of which a porous electrode 2 (anode) and 3 (cathode) is provided externally; both electrodes 2 and 3 are provided with a catalyst at the interface 11.

An aqueous solution of liquid electrolyte 8 circulates between the two layers of solid electrolyte 6 and is managed by a closed and pressurized circuit, constituted by the ducts 12, 13 and 14, which controls its concentration by means of appropriate sensors 15 (and by means of an apparatus 15a for replenishing demineralized water in the liquid electrolyte 8, the demineralized water being drawn through a condenser 15b directly from the cathode output and being stored within an appropriate reservoir 15c) and removes the heat generated by the electrochemical reactions by means of a heat exchanger 16 if necessary.

Inside the device 1, an appropriate separation layer 17 allows the liquid electrolyte 8 to flow in the gap 7 between the two polymeric membranes which constitute the solid electrolyte 6.

Two bipolar plates 18 allow to feed the reagents 4 (hydrogen or mixture of gases containing hydrogen) and 5 (oxygen or air) to the electrodes 2 and 3 and allow series electrical connection between one cell 10 and the next.

Terminal pole plates 19 connect the pile of fuel cells 10 to the electrical load 20.

Electrical contact between the electrodes 2 and 3 and the bipolar plates 18 can be ensured and controlled by keeping under pressure the circuit of the aqueous solution of sulfuric acid 8 by means of an appropriate pressurization device 9.

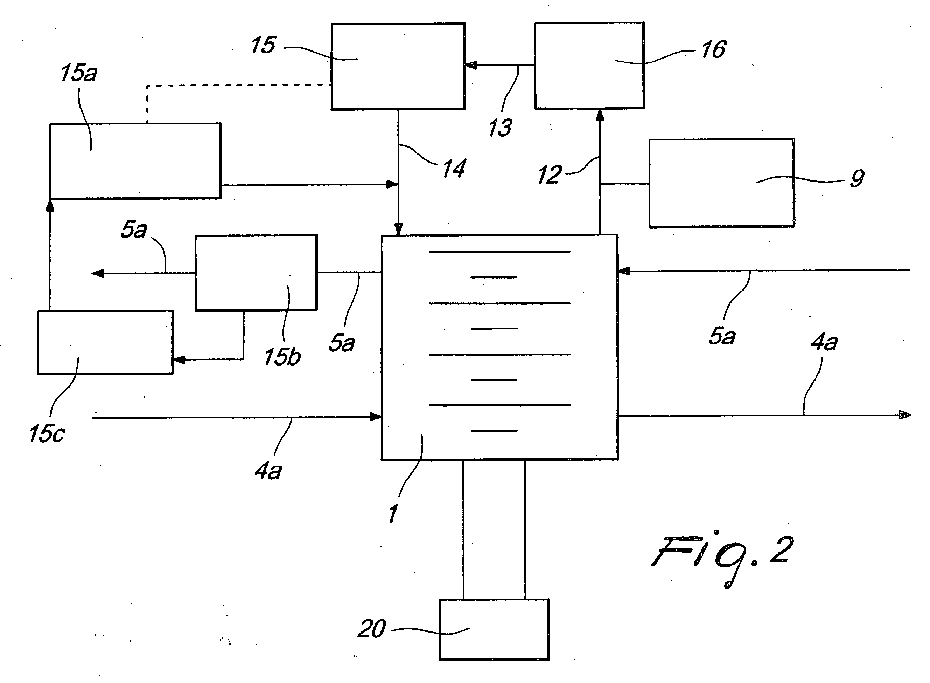

The membranes that constitute the solid electrolyte 6 are humidified in an optimum manner without having to humidify the reagents (fuel 4 and oxidant 5) and control the flow-rate of the cathode flow 5a even at high temperatures (80-120 °C), producing extremely limited polarizations. In Figure 2, the reference numeral 4a designates the anode flow, on the output of which no operation is instead performed.

Humidification is perfectly uniform and practically independent of the operating conditions (temperatures, flow-rates of the reagents, reaction rates within the device), differently from what occurs in conventional devices using a polymeric electrolyte.

The regions of most intense heat generation are in close thermal contact with the aqueous solution 8, which prevents local temperature peaks even at high reaction rates.

An embodiment of the invention which has allowed to verify fully its validity is as follows.

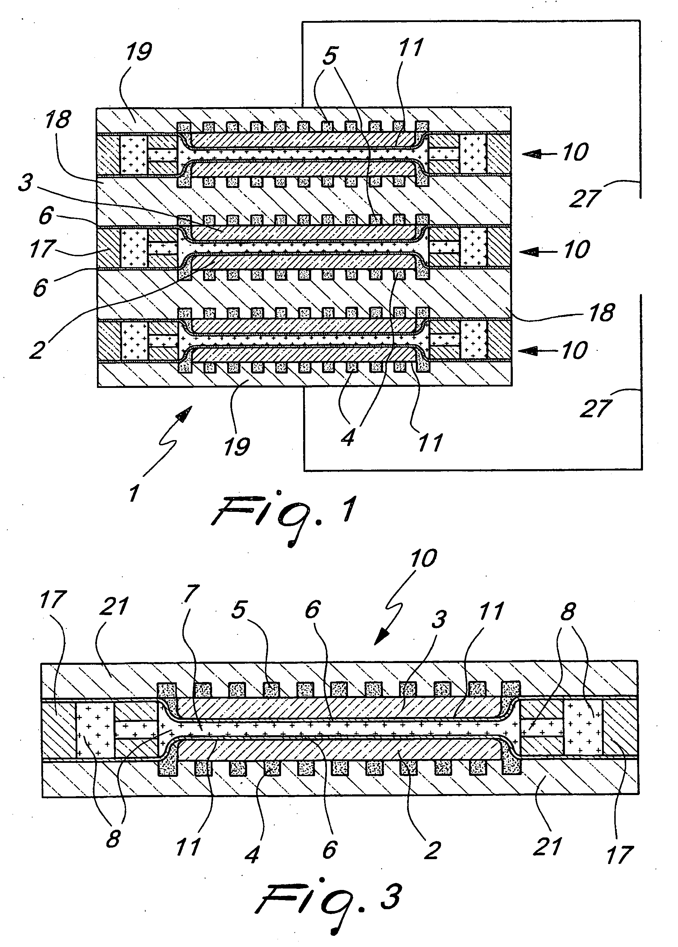

Said embodiment is a single fuel cell which is based on the configuration of Figure 1 and in particular complies with the configuration of Figure 3.

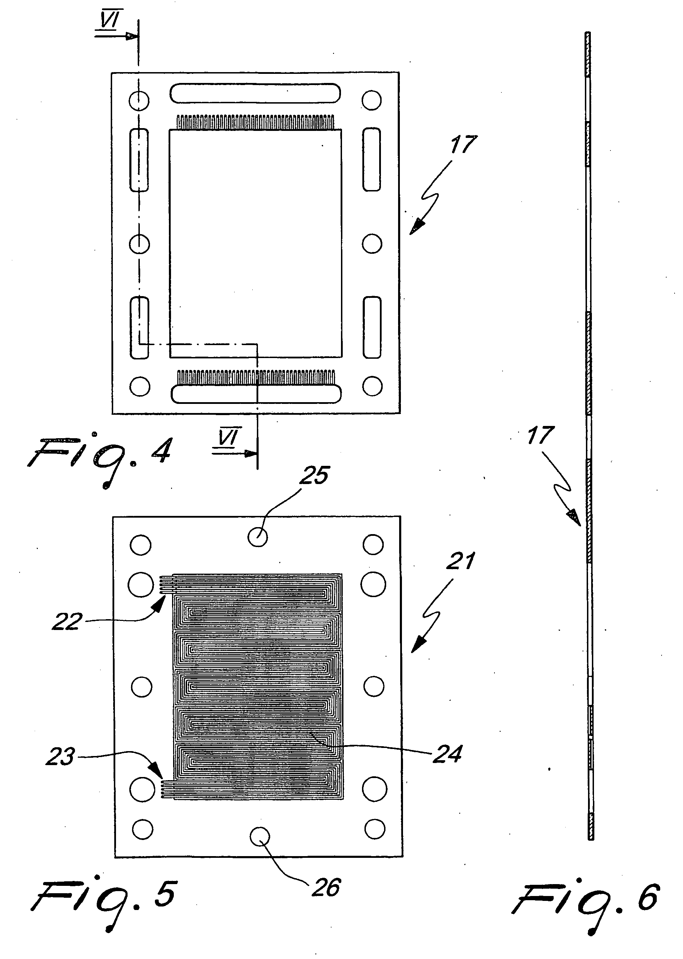

Two identical pole plates 21, shown individually in Figure 5, are provided: in Figure 5, the reference numeral 22 designates the reagent input area and the reference numeral 23 designates the reagent output area, while the reference numeral 24 designates the reagent flow field; the region 25 is the region from which the solution 8 enters, while the region 26 is the region from which said solution exits.

A separation layer 17 is provided which also acts as a gasket for the seals of the electrolyte 8 and of the reagents 4 and 5.

The actual configuration of the separator 17 is shown in Figures 4 and 6. Such separator 17 is made of a material which allows a perfect seal by deforming after closure.

The electrolyte 8 used in this case is a 20% aqueous solution of sulfuric acid (H₂SO₄) by weight.

This configuration allows to create a film of electrolyte 8 which is as thin as needed, by varying the thickness of the separation layer 17 and/or of the solid electrolyte membranes 6 and of the porous electrodes 2 and 3.

In this embodiment, the electrodes 2 and 3 both have thicknesses of substantially 0.3 mm, the solid electrolyte membrane 6 has a thickness of 0.035 mm, the separator 17 has a thickness of 0.8 mm, and therefore the film of electrolyte 8 has a thickness of 0.13 mm.

The individual cell 10 was operated by supplying it with dry air and hydrogen.

The operation of the invention is as follows: by supplying each individual cell 10 with respective streams of fuel 4 and oxidant 5, the chemical reactions that occur between them, with consequent proton flow through the solid electrolyte 6 and the liquid electrolyte 8, entail the generation of a potential difference between the terminals 27, across which the load 20 is then connected.

The following have been observed during the operation of a device 1 with the constructive architecture according to the invention: immediate start; very good performance, in terms of power and efficiency, already at ambient temperature; performance improves greatly as the temperature increases; the configuration ensures perfect seals; operation is possible above 100 °C.

Advantageously, the conceptual configuration that has been found allows to design the electrochemical cells 10 so that the film of liquid electrolyte 8 that is present is as thin as required (even thinner than 0.1 mm).

Positively, optimum electrical contact between the electrodes 2 and 3 and the bipolar plates 18 can be ensured by keeping the solution of electrolyte 8 at the pressure deemed most appropriate.

Conveniently, the presence of the electrolyte in the liquid phase 8 and of the two solid membranes 6 allows to obtain, in the same operating conditions a performance that is better than the performance observed for a polymer electrolyte cell which operates with a single membrane having identical characteristics.

The present invention allows to operate the device without particular complications up to temperatures of at least 120 °C.

The solution 8 freezes at temperatures below -15°C, ensuring an advantage in application for the starting of the system, particularly in automotive applications.

These temperatures, which are distinctly higher than the typical temperatures for PEFCs (polymer electrolyte fuel cells) (60-80 °C), allow lower polarizations and therefore better performance and greater potential utilization of the heat generated for possible cogeneration purposes.

The device 1 allows to obtain systems which have volumes and weights which are comparable to those having an equal performance which can be obtained with the single-membrane technology and are suitable both for stationary applications and for automotive applications.

Devices 1 based on the present invention allow to have high power densities both per unit weight and per unit volume.

Management of the heat generated in the device 1 is simple and can be provided in a compact manner.

The concentration of the aqueous solution of electrolyte 8 can be controlled easily.

The cathode flow-rate can be changed over a very wide range depending on the requirements of the individual application without compromising correct operation.

Identification of the configuration of the optimum flow fields for the reagents, a considerably onerous aspect for current technology, becomes marginally important.

It has thus been shown that the invention achieves the proposed aim and objects.

The invention thus conceived is susceptible of numerous modifications and variations, all of which are within the scope of the inventive concept.

All the details may further be replaced with other technically equivalent ones.

In the described embodiments, individual characteristics, given in relation to specific examples, may actually be interchanged with other different characteristics that exist in other embodiments.

Finally, it is noted that anything found to be already known during the patenting process is understood not to be claimed and to be the subj ect of a disclaimer.

In practice, the materials used, as well as the shapes and the dimensions, may be any according to the requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An electrochemical device comprising at least one pair of mutually facing electrodes (2, 3), between which an electrolyte is interposed, said electrodes (2, 3) being porous and being contacted respectively by a fuel (4) and by an oxidant (5), which arrive from respective supply circuits, **characterized in that** said electrolyte has a substantially laminar structure, comprising at least two laminates of electrolyte in the solid state (6) between which at least one layer of an aqueous solution of liquid electrolyte (8) is interposed within a gap (7), said aqueous solution of liquid electrolyte (8) being within a closed and pressurized circulation circuit comprising said gap (7) and comprising a pressurization apparatus (9) to maintain the pressure of the aqueous solution of liquid electrolyte (8) inside said circuit at a preset value.

2. The device according to claim 1, **characterized in that** said aqueous solution of liquid electrolyte (8) is an aqueous solution of sulphuric acid.

3. The device according to claim 1, **characterized in that** said gap (7) occupied by the aqueous solution of liquid electrolyte (8) has a thickness of even less than 0.1 mm.

4. The device according to claim 1, **characterized in that** said laminates of electrolyte in the solid state (6) are of the polymeric type and each one is deposited on the respective electrode (2, 3) and is provided with thin layers of catalyst (11) at the interface.

5. The device according to claim 1. **characterized in that** said electrodes (2, 3) are comprised between respective bipolar plates (18) which are provided with channels for feeding the fuel (4) and the oxidant (5), respectively.

6. The device according to claim 5, **characterized in that** said fuel (4) is constituted at least partially by hydrogen and **in that** said oxidant (5) is constituted at least partially by oxygen.

7. The device according to one or more of the receding claims,
**characterized in that** said device (1) has operating temperatures which can even exceed 120 °C.

8. The device according to one of more of the preceding claims, **characterized in that** it comprises a plurality of pairs of electrodes (2, 3), which are superimposed and connected in electrical series and are comprised between respective bipolar platens (18) and are supplied by respective streams of fuel (4) and oxidant (5) in order to obtain a preset nominal voltage.

9. The device according to one or more of the preceding claims, **characterized in that** said forged circulation circuit comprises a sensor (15) which is suitable to detect the concentration of sulfuric acid within the aqueous solution of liquid electrolyte (8) and is functionally controlled by a controlled dispenser (15a) of demineralized water, which is suitable to introduce water in the aqueous solution of liquid electrolyte (8) if the sulfuric acid concentration is excessive.

10. The device according to one or more of the receding claims, **characterized in that** said demineralized water is drawn by means of a condenser (15b) directly from the cathode output.

11. The device according to one or more of the preceding claims, **characterized in that** said forced-circulation circuit comprises a heat exchanger (16) in order to keep the temperature of the aqueous solution of liquid electrolyte (8) at a preset value.

## Patentansprüche

1. Elektrochemische Vorrichtung, umfassend mindestens ein Paar von gegenseitig gegenüberstehenden Elektroden (2, 3), zwischen welchen ein Elektrolyt eingeschoben ist, wobei die Elektroden (2, 3) porös sind und durch einen Brennstoff (4) beziehungsweise durch einen Sauerstoffträger (5) kontaktiert sind, welche aus jeweiligen Zuleitungskreisen kommen, **dadurch gekennzeichnet, daß** der Elektrolyt eine im wesentlichen laminare Struktur hat, umfassend mindestens zwei Elektrolytlaminate im festen Aggregatzustand(6), zwischen welchen mindestens eine Schicht einer wäßrigen Lösung flüssigen Elektrolyts (8) innerhalb eines Spalts (7) eingeschoben ist, wobei die wäßrige Lösung flüssigen Elektrolyts (8) sich innerhalb eines geschlossenen und unter Druck gesetzten Zirkulationskreises befindet, enthaltend den Spalt (7) und enthaltend eine Druckerzeugungsvorrichtung (9), um den Druck der wäßrigen Lösung flüssigen Elektrolyts (8) innerhalb des Kreises auf einen festgesetzten Wert zu halten.

2. Vorrichtung nach Anspruch 1, **dadurch gekennzeichnet, daß** die wäßrige Lösung flüssigen Elektrolyts (8) eine wäßrige Lösung von Schwefelsäure ist.

3. Vorrichtung nach Anspruch 1, **dadurch gekennzeichnet, daß** der von der wäßrigen Lösung flüssigen Elektrolyts (8) eingenommene Spalt (7) eine Stärke von sogar weniger als 0,1 mm hat.

4. Vorrichtung nach Anspruch 1, **dadurch gekennzeichnet, daß** die Elektrolytlaminate im festen Aggregatzustand (6) vom Polymertyp sind und jedes auf die jeweilige Elektrode (2, 3) aufgelegt ist und mit dünnen Katalysatorschichten (11) an der Grenzfläche versehen ist.

5. Vorrichtung nach Anspruch 1, **dadurch gekennzeichnet, daß** die Elektroden (2, 3) zwischen jeweiligen bipolaren Platten (18) enthalten sind, welche mit Kanälen für die Zuleitung des Brennstoffs (4) beziehungsweise des Sauerstoffträgers (5) versehen sind.

6. Vorrichtung nach Anspruch 5, **dadurch gekennzeichnet, daß** der Brennstoff (4) mindestens teilweise durch Wasserstoff gebildet ist und daß der Sauerstoffträger (5) mindestens teilweise durch Sauerstoff gebildet ist.

7. Vorrichtung nach einem oder mehreren der vorangehenden Ansprüche, **dadurch gekennzeichnet, daß** die Vorrichtung (1) Betriebstemperaturen hat, welche sogar 120 °C überschreiten können.

8. Vorrichtung nach einem oder mehreren der vorangehenden Ansprüche, **dadurch gekennzeichnet; daß** sie eine Mehrzahl von Elektrodenpaaren (2, 3) umfaßt, welche übereinander angeordnet und in elektrischen Serien verbunden sind und zwischen jeweiligen bipolaren Platten (18) enthalten sind und gespeist werden durch jeweilige Ströme von Brennstoff (4) und Sauerstoffträger (5) um eine festgesetzte Nennspannung zu erhalten.

9. Vorrichtung nach einem oder mehreren der vorangehenden Ansprüche, **dadurch gekennzeichnet, daß** der erzwungene Zirkulationskreis einen Sensor (15) enthält, welcher geeignet ist, die Konzentration von Schwefelsäure innerhalb der wäßrigen Lösung flüssigen Elektrolyts (8) zu erfassen und funktionell zu regulieren durch ein gesteuertes Ausgabegerät (15a) für demineralisiertes Wasser, welches geeignet ist Wasser in die wäßrige Lösung flüssigen Elektrolyts (8) einzuführen, falls die Schwefelsäurekonzentration überhöht ist.

10. Vorrichtung nach einem oder mehreren der vorangehenden Ansprüche, **dadurch gekennzeichnet, daß** das demineralisierte Wasser mittels eines Kondensators (15b) direkt von dem Katodenausgang abgezogen wird.

11. Vorrichtung nach einem oder mehreren der vorangehenden Ansprüche, **dadurch gekennzeichnet, daß** der erzwungene Zirkulationskreis einen Wärmetauscher (16) enthält, um die Temperatur der wäßrigen Lösung flüssigen Elektrolyts (8) auf einem festgesetzten Wert zu halten.

## Revendications

1. Dispositif électrochimique comprenant au moins une paire d'électrodes se faisant face mutuellement (2, 3), entre lesquelles un électrolyte est interposé, lesdites électrodes (2, 3) étant poreuses et étant en contact respectivement avec un combustible (4) et un oxydant (5), lesquels proviennent de circuits d'alimentation respectifs, **caractérisé en ce que** ledit électrolyte a une structure sensiblement stratifiée, comprenant au moins deux stratifiés d'électrolyte à l'état solide (6) entre lesquels au moins une couche d'une solution aqueuse d'électrolyte liquide (8) est interposée dans un espace (7), ladite solution aqueuse d'électrolyte liquide (8) se trouvant dans un circuit de circulation fermé et sous pression comprenant ledit espace (7) et comprenant un appareil de mise sous pression (9) pour maintenir la pression de la solution aqueuse d'électrolyte liquide (8) à l'intérieur dudit circuit à une valeur présélectionnée.

2. Dispositif selon la revendication 1, **caractérisé en ce que** ladite solution aqueuse d'électrolyte liquide (8) est une solution aqueuse d'acide sulfurique.

3. Dispositif selon la revendication 1, **caractérisé en ce que** ledit espace (7) occupé par la solution aqueuse d'électrolyte liquide (8) a une épaisseur inférieure à 0,1 mm.

4. Dispositif selon la revendication 1, **caractérisé en ce que** lesdits stratifiés d'électrolyte à l'état solide (6) sont du type polymère et sont chacun déposés sur l'électrode respective (2, 3) et sont dotés de couches minces de catalyseur (11) à l'interface.

5. Dispositif selon la revendication 1, **caractérisé en ce que** lesdites électrodes (2, 3) sont placées entre des plaques bipolaires (18) respectives qui sont dotées de canaux pour délivrer respectivement le combustible (4) et l'oxydant (5).

6. Dispositif selon la revendication 5, **caractérisé en ce que** ledit combustible (4) est constitué au moins partiellement par de l'hydrogène et **en ce que** ledit oxydant (5) est constitué au moins partiellement par de l'oxygène.

7. Dispositif selon une ou plusieurs des revendications précédentes, **caractérisé en ce que** ledit dispositif (1) présente des températures de fonctionnement qui peuvent même dépasser 120 °C.

8. Dispositif selon une ou plusieurs des revendications précédentes, **caractérisé en ce qu'**il comprend une pluralité de paires d'électrodes (2, 3), qui sont superposées et connectées en série électrique et sont placées entre des plaques bipolaires (18) respectives et sont alimentées par des jets respectifs de combustible (4) et d'oxydant (5) afin d'obtenir une tension nominale présélectionnée.

9. Dispositif selon une ou plusieurs des revendications précédentes, **caractérisé en ce que** ledit circuit de circulation forcée comprend un capteur (15) qui est approprié pour détecter la concentration en acide sulfurique dans la solution aqueuse d'électrolyte liquide (8) et est commandé d'un point de vue fonctionnel par un distributeur commandé (15a) d'eau déminéralisée, qui est approprié pour introduire de l'eau dans la solution aqueuse d'électrolyte liquide (8) si la concentration en acide sulfurique est excessive.

10. Dispositif selon une ou plusieurs des revendications précédentes, **caractérisé en ce que** ladite eau déminéralisée est tirée au moyen d'un condenseur (15b) directement depuis la sortie de cathode.

11. Dispositif selon une ou plusieurs des revendications précédentes, **caractérisé en ce que** ledit circuit de circulation forcée comprend un échangeur de chaleur (16) afin de maintenir la température de la solution aqueuse d'électrolyte liquide (8) à une valeur présélectionnée.
